# EUROPEAN PATENT APPLICATION

(11) **EP 4 814 073 A1**
(43) Date of publication of application: **30.09.2026**
(21) Application number: 24916480.7
(22) Date of filing: 09.10.2024
(51) Int. Cl.: C09J 7/30, E04B 2/88, G02B 5/126

(54) **LIGHT-GUIDING DECORATIVE FACING MATERIAL AND PREPARATION METHOD THEREFOR, AND PHOTOVOLTAIC CURTAIN WALL AND COMPONENT**

(30) Priority: 09.01.2024 CN 202410033338
(71) Applicant: Phomi MCM Co., Ltd., Laibin, Guangxi 546199 (CN)
(72) Inventor: SHI, Lei, Guangzhou, Guangdong 510705 (CN)
(74) Representative: Vogelbruch, Keang
(86) International application number: PCT/CN2024/123596
(87) International publication number: WO 2025/148429

(57) **Abstract**

A light-guiding decorative facing material, comprising: a first transparent adhesive layer; a multi-faceted refractive see-through microcrystal layer, fixedly connected to the first transparent adhesive layer, the multi-faceted refractive see-through microcrystal layer being made of a transparent/semi-transparent crystalline material, and the surface of the multi-faceted refractive see-through microcrystal layer being provided with an inkjet-printed pattern layer. The light-guiding decorative facing material is suitable for decorating the surface of a photovoltaic power generation panel, covering the photovoltaic power generation panel so that the color of the photovoltaic power generation panel is not exposed on the outer surface, and thus not affecting the aesthetic appeal of a building, while ensuring that sunlight can pass through and be transmitted to the photovoltaic power generation panel, thereby ensuring that the photovoltaic power generation panel can perform photoelectric conversion normally.

## Description

### Technical Field

The present invention relates to the technical field of photovoltaic building materials, in particular to a light-guiding decorative facing material and a preparation method therefor, a photovoltaic curtain wall, and a component.

### Background technology

The solar photovoltaic power generation technology, originating from the 1950s, uses energy coming from the sun. Compared with traditional power generation technologies, it basically does not produce CO₂ during the entire power generation process and will not cause pollution and damage to the natural ecological environment. As the current world energy situation becomes increasingly more severe, solar photovoltaic power generation has developed rapidly in recent years as one of the sustainable energy alternatives, and has also been applied to the building field.

At present, solar photovoltaic panels applied to the building field usually use EVA adhesive films to bond solar cells, that can convert solar energy into electrical energy, to back plates, and then use glass to encapsulate the solar cells by means of the EVA films. Typically, the solar photovoltaic panels are mounted outside the roof of a building by means of support devices. Since the solar cells of existing solar photovoltaic panels are generally blue or black, the solar photovoltaic panels, after being assembled on the roof of the building, mismatch external designs such as the shape and color of the building, which affects the aesthetics of the building and causes visual pollution to the building, thereby greatly limiting the application of the solar photovoltaic panels in the building field.

### Summary

An objective of the present invention is to overcome the defect that solar photovoltaic panels in the prior art cannot be widely applied to the building field due to mismatches with the designs of buildings and provide a light-guiding decorative facing material, which is suitable for decorating the surface of a photovoltaic cell and covers the photovoltaic cell to prevent the color of the photovoltaic cell from being exposed to the outer surface, thus not affecting the aesthetic appeal of a building, while ensuring that sunlight can pass through and be transmitted to the photovoltaic cell, thereby ensuring that the photovoltaic cell can perform photoelectric conversion normally.

To fulfill the above objective, the present invention adopts the following technical solution:

A light-guiding decorative facing material includes a first transparent adhesive layer and a multi-faceted refractive see-through microcrystal layer fixedly connected to the first transparent adhesive layer, where the multi-faceted refractive see-through microcrystal layer is made of a transparent/semi-transparent crystalline material, and a surface of the multi-faceted refractive see-through microcrystal layer is provided with an inkjet-printed pattern layer.

Further, the transparent/semi-transparent crystalline material is a rhombohedral crystalline material, and the rhombohedral crystal material is one or a mixture of two or more selected from Zr-doped BaTiO₃, Hf-doped BaTiO₃, α-Al₂O₃, α-CrO₃, α-Ca₂O₃, α-FeAlO₃, and transition metal-doped α-Al₂₋ₓTₓO₃(T=Sc, Y, La, Ac; x=0.5); and the first transparent adhesive layer is formed by curing a transparent adhesive, and the transparent adhesive is one or a mixture of two or more selected from a transparent epoxy resin adhesive, a transparent EVA, a transparent EAA, a transparent acrylic emulsion and a silicone-acrylic emulsion.

Further, the rhombohedral crystalline material is at least partially inlaid in the first transparent adhesive layer.

Further, the first transparent adhesive layer has a thickness of 0.5-3 mm, the multi-faceted refractive see-through microcrystal layer has a thickness of 0.5-2 mm, the inkjet-printed pattern layer has a thickness of 0.01-0.5 mm, and the transparent/semi-transparent crystalline material has a granularity less than or equal to 10 µm.

The present invention further provides a preparation method for the light-guiding decorative facing material. The preparation method includes: providing a transparent adhesive emulsion, applying the transparent adhesive emulsion to a forming mold to form the first transparent adhesive layer, then laying the rhombohedral crystalline material on the first transparent adhesive layer to form the multi-faceted refractive see-through microcrystal layer, performing curing, and finally, performing inkjet-printing on the surface of the multi-faceted refractive see-through microcrystal layer to form the inkjet-printed pattern layer; or, mixing the rhombohedral crystalline material and the transparent adhesive emulsion into a slurry, then applying the slurry on the forming model, and performing curing.

Further, a temperature for the curing ranges from a room temperature to 200°C, and a time for the curing is 10-120 min.

Further, when the rhombohedral crystalline material and the transparent adhesive emulsion are mixed into the slurry, the weight ratio of the rhombohedral crystalline material to the transparent adhesive emulsion is 1:(1-5).

The present invention further provides a photovoltaic curtain wall, including the light-guiding decorative facing material. The photovoltaic curtain wall further includes a photovoltaic cell, and the light-guiding decorative facing material is fixed to a surface of the photovoltaic cell.

Further, the light-guiding decorative facing material is fixed to the surface of the photovoltaic cell by means of a second transparent adhesive layer.

Further, a protective layer is arranged on the surface of the photovoltaic cell, and the light-guiding decorative facing material is fixed to a surface of the protective layer by means of the second transparent adhesive layer.

Further, the photovoltaic curtain wall further includes a substrate, where the photovoltaic cell is fixed above the substrate by means of a fourth transparent adhesive layer.

Further, the substrate is a glass substrate or a modified inorganic powder composite building decorative panel.

The present invention further provides a component, including a base body and the light-guiding decorative facing material, where the light-guiding decorative facing material is fixed to a surface of the base body, the base body is provided with a power-on display device, and the light-guiding decorative facing material covers a surface of the power-on display device.

Further, the base body is provided with a recess, the power-on display device is arranged in the recess, and the power-on display device is a display screen or a lamp.

Compared with the prior art, the present invention has the following beneficial effects:

The light-guiding decorative facing material provided by the present invention uses the multi-faceted refractive see-through microcrystal layer made of the transparent/semitransparent crystalline material, the rhombohedral crystalline material is a crystalline material with multiple prismatic faces, each of which can refract sunlight, and even if a pattern is printed on the surface of the multi-faceted refractive see-through microcrystal layer, areas not directly exposed to sunlight under the pattern can still be illuminated by light refracted by the rhombohedral crystalline material, such that a large and complete light-illuminated area is formed under the multi-faceted refractive see-through microcrystal layer, making the facing material have both a decorative function and a light-guiding function, and suitable for scenarios where light guiding is required, such as photovoltaic panels for converting solar energy into electric energy by means of light, and components for light transmission.

The light-guiding decorative facing material provided by the present invention has both a decorative function and a light-guiding function, can be applied to a photovoltaic curtain wall to cover a photovoltaic cell on the photovoltaic curtain wall, and can conceal the appearance shape and color of the photovoltaic cell, so that the photovoltaic cell is not visible from the outside, and only the pattern of the inkjet-printed pattern layer of the light-guiding decorative facing material can be seen. Therefore, on the one hand, the photovoltaic curtain wall can be in harmony with a building in style and color; on the other hand, since the light-guiding decorative facing material has a good light-guiding ability, it ensures that the solar cell in the photovoltaic curtain wall can absorb sufficient light for photoelectric conversion.

The light-guiding decorative facing material provided by the present invention can also be applied to components that require the display of photoelectric patterns, such as components provided with a power-on display device. The power-on display device in the component emits light and displays a pattern when powered on. By using the light-guiding decorative facing material provided by the present invention to cover the surface of the power-on display device, the rhombohedral crystalline material in the light-guiding decorative facing material can refract the light emitted by the power-on display device onto the surface of the inkjet-printed pattern layer, such that when the component is not powered on, the outer surface of the component shows the inkjet-printed pattern layer, and when the component is powered on, the inkjet-printed pattern layer also displays a pattern formed by the light emitted by the power-on display device, thereby creating a unique decorative style.

### Description of the drawings

To more clearly describe the technical solutions in the embodiments of the present invention, drawings used for describing the embodiments are briefly introduced below.
FIG. 1 is a schematic structural diagram of a light-guiding decorative facing material according to the present invention.
FIG. 2 is another schematic structural diagram of the light-guiding decorative facing material according to the present invention.
FIG. 3 is a schematic structural diagram of a photovoltaic curtain wall using the light-guiding decorative facing material according to the present invention.
FIG. 4 is a schematic structural diagram of a component using the light-guiding decorative facing material according to the present invention.

In the FIGS.:
10, inkjet-printed pattern layer; 20, multi-faceted refractive see-through microcrystal layer; 30, first transparent adhesive layer; 40, second transparent adhesive layer; 50, protective layer; 60, third transparent adhesive layer; 70, photovoltaic cell; 80, fourth transparent adhesive layer; 90, substrate; 10a, metal frame; 10b, metal fastener; 11, base body; 12, power-on display device; 13, recess.

### Detailed description of the invention

The embodiments of the present invention are described in detail below. Examples of the embodiments are shown in the accompanying drawings, wherein identical or similar reference signs indicate identical or similar elements or elements with identical or similar functions. The embodiments described below with reference to the accompanying drawings are illustrative, intend to explain the present invention and should not be construed as limitations of the present invention.

In the description of the present invention, it should be understood that terms such as "central", "longitudinal", "transverse", "length", "width", "thickness", "upper", "lower", "front", "back", "left", "right", "vertical", "horizontal", "top", "bottom", "inner", "outer", "clockwise", "anticlockwise", "axial", "radial" and "circumferential" are used to indicate directional or positional relations on the basis of the accompanying drawings merely for the purpose of facilitating and simplifying the description of the present invention, do not indicate or imply that devices or elements referred to must be in a specific direction or be configured and operated in a specific direction, and thus should not be construed as limitations of the present invention.

In addition, terms "first" and "second" are merely for the purpose of description and should not be construed as indicating or implying relative importance or implicitly indicating the number of technical features referred to. A feature defined by "first" or "second" may explicitly or implicitly indicate the inclusion of at least one said feature. In the description of the present invention, "multiple" refers to at least two such as two or three, unless otherwise expressly defined.

In the present invention, unless otherwise expressly stated and defined, terms such as "mount", "link", "connect" and "fix" should be understood in a broad sense. For example, "connect" may refer to fixed connection, detachable connection or integrated connection; mechanical connection or electrical connection; direct connection, indirect connection by means of an intermediate medium, or internal communication of two elements, or interaction of two elements. Those ordinarily skilled in the art may appreciate the specific meanings of these terms in the present invention according to specific circumstances.

In the present invention, unless otherwise expressly stated and defined, the term "comprise" or "provided with" aims to indicate the presence of a specific feature, quantity, step, operation, element, part or a combination thereof, and does not exclude the presence or addition of one or more other features, quantities, steps, operations, elements, parts or combinations thereof.

### Embodiment 1

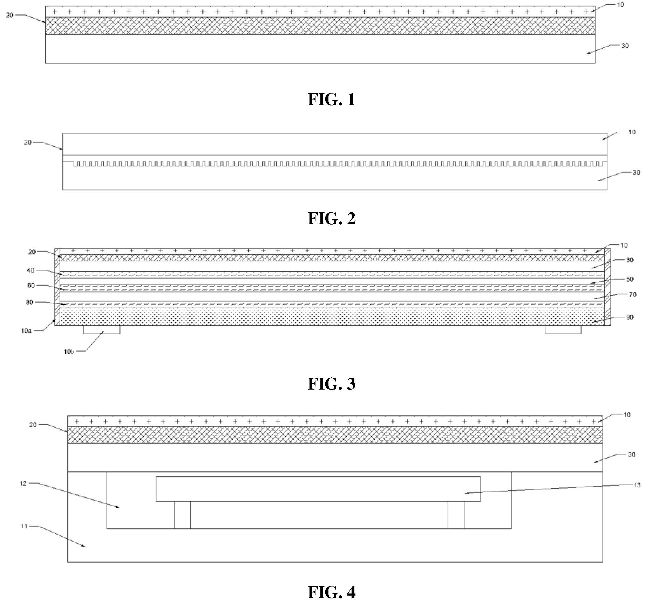

Referring to FIG. 1 which shows the structure of a light-guiding decorative facing material in this embodiment, the light-guiding decorative facing material includes an inkjet-printed pattern layer 10, a multi-faceted refractive see-through microcrystal layer 20 and a first transparent adhesive layer 30.

In this embodiment, the multi-faceted refractive see-through microcrystal layer 20 is made of a transparent/semi-transparent crystalline material. The transparent/semi-transparent crystalline material includes a cubic crystalline material, a hexagonal crystalline material, a tetragonal crystalline material, a trigonal crystalline material, an orthorhombic crystalline material, a monoclinic crystalline material or a triclinic crystalline material. For example, the cubic crystalline material may be β-SiC, the hexagonal crystalline material may be Be₃Al₂Si₆Oi₈, the tetragonal crystalline material may be tin/rutile/scheelite, and the trigonal crystalline material may be a calcite crystal, or the like. In this embodiment, a rhombohedral crystalline material is preferred, and the rhombohedral crystal material is one or a mixture of two or more selected from Zr-doped BaTiO₃, Hf-doped BaTiO₃, α-Al₂O₃, α-CrO₃, α-Ca₂O₃, α-FeAlO₃, and transition metal-doped α-Al₂₋ₓTₓO₃(T=Sc, Y, La, Ac; x=0.5). The granularity of the rhombohedral crystal material is less than or equal to 10 µm. The first transparent adhesive layer is formed by curing a transparent adhesive, and the transparent adhesive is one or a mixture of two or more selected from a transparent epoxy resin adhesive, a transparent EVA, a transparent EAA, a transparent acrylic emulsion and a silicone-acrylic emulsion. The multi-faceted refractive see-through microcrystal layer 20 is fixed to the surface of the first transparent adhesive layer 30; or, the multi-faceted refractive see-through microcrystal layer 20 is inlaid in the first transparent adhesive layer 30. In a case where the multi-faceted refractive see-through microcrystal layer is fixed to the surface of the first transparent adhesive layer, the rhombohedral crystalline material is fixedly bonded to the surface of the first transparent adhesive layer. In a case where the multi-faceted refractive see-through microcrystal layer is inlaid in the first transparent adhesive layer, the rhombohedral crystalline material is partially or entirely inlaid in the first transparent adhesive layer.

In this embodiment, the first transparent adhesive layer 30 has a thickness of 0.5-3 mm, the multi-faceted refractive see-through microcrystal layer 20 has a thickness of 0.5-2 mm, and the inkjet-printed pattern layer 10 has a thickness of 0.01-0.5 mm.

In this embodiment, a preparation method for the light-guiding decorative facing material includes the following steps:
S10, a transparent adhesive emulsion is provided and applied to a forming mold to form the first transparent adhesive layer;
S20, the rhombohedral crystalline material crushed to a granularity less than 10 µm is laid on the first transparent adhesive layer to form the multi-faceted refractive see-through microcrystal layer, and then curing is performed; and
S30, demolding is performed, and inkjet-printing is performed on the surface of the multi-faceted refractive see-through microcrystal layer to form the inkjet-printed pattern layer.

According to the preparation method in this embodiment, the time and temperature for the curing in step S20 depend on the transparent adhesive emulsion and the thickness, and the temperature for the curing may range from the room temperature to 200°C, and the time for the curing may be 10-120 min. For example, in a case where the transparent adhesive emulsion is an acrylic emulsion and the thickness is 0.5 mm, the temperature for the curing is preferably 80-120°C, and the time for the curing is 40-60 min. In a case where the transparent adhesive emulsion is a transparent epoxy resin adhesive slurry and the thickness is 1.0 mm, the temperature for the curing is preferably 160-200°C, and the time for the curing is 10-30 min.

According to the preparation method in this embodiment, the inkjet-printing is performed by means of an inorganic ink and a printer.

By adopting the above the preparation method, the multi-faceted refractive see-through microcrystal layer of the light-guiding decorative facing material is fixed to the surface of the first transparent adhesive layer.

Referring to FIG. 2 which shows another schematic structural diagram of the light-guiding decorative facing material in this embodiment, the multi-faceted refractive see-through microcrystal layer 30 is inlaid in the first transparent adhesive layer 10. The preparation method includes the following steps:
S10, a transparent adhesive emulsion and a rhombohedral crystalline material are provided and mixed into a slurry, then the slurry is applied to a forming mold, and curing is performed; and
S20, after demolding, inkjet-printing is performed on the surface to form the inkjet-printed pattern layer.

According to the above preparation method, when the rhombohedral crystalline material and the transparent adhesive emulsion are mixed into the slurry, the weight ratio of the rhombohedral crystalline material to the transparent adhesive emulsion is 1:(1-5). Preferably, the weight ratio of the rhombohedral crystalline material to the transparent adhesive emulsion is 1:3, such that the light-guiding performance of the light-guiding decorative facing material is guaranteed, a good bonding effect is achieved, the ink absorbency is good, and a pattern on the inkjet-printed pattern layer 10 is clear, firm and free of ink bleeding.

### Embodiment 2

Referring to FIG. 3 which shows the structure of a photovoltaic curtain wall using the light-guiding decorative facing material in Embodiment 1, the photovoltaic curtain wall includes a photovoltaic cell 70, where the light-guiding decorative facing material covers the surface of the photovoltaic cell 70. The surface of a photovoltaic cell of an existing photovoltaic curtain wall is covered with a glass layer to meet the operational requirement of the photovoltaic cell to convert solar energy into electric energy by means of light. Since the appearance shape and color of the photovoltaic cell are visible through the glass layer, the photovoltaic cell does not match surrounding buildings in many scenarios, limiting the application of photovoltaic curtain walls. In this embodiment, the surface of the photovoltaic curtain wall is covered with the light-guiding decorative facing material in Embodiment 1, such that on the one hand, the lighting requirement of the photovoltaic cell to convert solar energy into electrical energy is satisfied; on the other hand, since the inkjet-printed pattern layer on the surface of the light-guiding decorative facing material can cover the photovoltaic cell, the shape and color of the photovoltaic cell are not visible from the outside, and only the pattern of the inkjet-printed pattern layer is visible, such that the photovoltaic curtain wall can be to be applied to any building without causing visual pollution to the building.

In this embodiment, the light-guiding decorative facing material is bonded to and covers the surface of the photovoltaic cell 70 by means of a second transparent adhesive layer 50. Because the photovoltaic cell is relatively brittle and thin, in order to prevent the light-guiding decorative facing material from crushing the photovoltaic cell during the process of being bonded to the surface of the photovoltaic cell, a protective layer 50 is first adhered to the photovoltaic cell before the light-guiding decorative facing material is bonded to the photovoltaic cell. The protective layer 50 may be a polyethylene glycol terephthalate (PET) layer, which effectively prevents damage to the photovoltaic cell when the light-guiding decorative facing material is adhered to the photovoltaic cell. The PET layer is adhered to the photovoltaic cell by means of a third transparent adhesive layer 60.

In this embodiment, the photovoltaic curtain wall further includes a substrate 90, and the photovoltaic cell 70 is fixed above the substrate by means of a fourth transparent adhesive layer 80. The substrate 90 may be a glass substrate or a modified inorganic powder composite building decorative panel. The modified inorganic powder composite building decorative panel includes, by weight, 20-80% of modified inorganic powder, 3-30% of an acrylic polymer emulsion and/or latex powder, and the balance water. The modified inorganic powder is at least one selected from waste building cement block powder, waste powder from stone factories, coal slag powder, waste powder from ceramic factories, and sand, modified with a surface-active agent. The surface-active agent is a rare earth coupling agent, an aluminate coupling agent, or a titanate coupling agent. The amount of the surface-active agent added is 0.3-2% of the total weight of the modified inorganic powder. A high-molecular polymer coating is a polyvinyl alcohol coating, a polyvinylpyrrolidone coating, or an epoxy acrylic resin coating.

In this embodiment, the second transparent adhesive layer 40, the third transparent adhesive layer 60 and the fourth transparent adhesive layer 80 may be all formed by coating and curing the same material as the first transparent adhesive layer. That is, the material of the second transparent adhesive layer 40, the third transparent adhesive layer 60 and the fourth transparent adhesive layer 80 is one or a mixture of two or more selected from a transparent epoxy resin adhesive, a transparent EVA, a transparent EAA, a transparent acrylic emulsion and a silicone-acrylic emulsion. The fourth transparent adhesive layer 80 may also be formed by curing a two-component transparent curing agent. The two-component transparent curing agent includes a component A, and a component B. The weight ratio of the component A to the component B is (2-1):(1-2). The component A is a polymer of a hydroxyl-containing oligomeric polyol and a polyisocyanate, and the component B is an adduct of a polyisocyanate containing an isocyanate group and a polyol containing active hydrogen, or an autopolymer of a polyisocyanate.

In this embodiment, the photovoltaic curtain wall further includes a metal frame 10a, and the substrate 90, the photovoltaic cell 70 and the light-guiding decorative facing material are stacked and fixed to form an integrated plate, and the periphery of the plate is inlaid in the metal frame 10a.

In this embodiment, the photovoltaic curtain wall further includes metal fasteners 10b, and the metal fasteners 10b are fixedly connected to the bottom of the metal frame 10a or the substrate 10 and used for fixing the photovoltaic curtain wall.

In this embodiment, the photovoltaic curtain wall may be a monocrystalline silicon cell, a polycrystalline silicon cell, or a thin-film solar cell.

Performance test:
(1) Sample preparation:
Control group: A commercially available polycrystalline silicon photovoltaic panel provided with a polycrystalline silicon cell, the surface of which is covered with a glass sheet.
Test group 1: The photovoltaic curtain wall provided by the present invention, where the photovoltaic cell of the photovoltaic curtain wall is a polycrystalline silicon cell, the surface of which is covered with the light-guiding decorative facing material provided by the present invention, the multi-faceted refractive see-through microcrystal layer is fixed to the surface of the first transparent adhesive layer, and the transparent crystalline material used by the multi-faceted refractive see-through microcrystal layer is a rhombohedral crystalline material.
Test group 2: The photovoltaic curtain wall provided by the present invention, where the photovoltaic cell of the photovoltaic curtain wall is a polycrystalline silicon cell, the surface of which is covered with the light-guiding decorative facing material provided by the present invention, the multi-faceted refractive see-through microcrystal layer is inlaid in the first transparent adhesive layer, and the transparent crystalline material used by the multi-faceted refractive see-through microcrystal layer is a rhombohedral crystalline material.
Test group 3: The photovoltaic curtain wall provided by the present invention, where the photovoltaic cell of the photovoltaic curtain wall is a polycrystalline silicon cell, the surface of which is covered with the light-guiding decorative facing material provided by the present invention, the multi-faceted refractive see-through microcrystal layer is fixed to the surface of the first transparent adhesive layer, and the transparent crystalline material used by the multi-faceted refractive see-through microcrystal layer is a tetragonal crystalline rutile material.
Test group 4: The photovoltaic curtain wall provided by the present invention, where the photovoltaic cell of the photovoltaic curtain wall is a polycrystalline silicon cell, the surface of which is covered with the light-guiding decorative facing material provided by the present invention, the multi-faceted refractive see-through microcrystal layer is fixed to the surface of the first transparent adhesive layer, and the transparent crystalline material used by the multi-faceted refractive see-through microcrystal layer is a trigonal crystalline calcite material.

(2) Photoelectric conversion efficiency: The photoelectric conversion efficiency was tested in accordance with GB/T 34160.
(3) Ink absorbency test: Characterized by the time taken for a certain amount of ink to be absorbed by different samples. A certain amount of ink was sprayed onto the sample, and then time recording was started; the surface of the sample was gently touched with a finger, and when it felt sticky and no ink stuck onto the hand, the coating surface was considered dry, and time recording was stopped. The resulting time was the ink absorption time of the coated sample. The shorter the ink absorption time, the faster the ink absorption rate. The test result is indicated by "*". The greater "*", the better the effect.
(4) Clarity test: Characterized by the ratio of the diameter of ink droplets after spreading on the sample to the diameter of the ink droplets before spreading. The smaller the ratio, the better the clarity. The test result is indicated by "*". The greater "*", the better the clarity.
(5) Artificial aging resistance test: The artificial aging resistance test was carried out in accordance with GB/T 16259.
(6) Test results: See Table 1

**Table 1 Test results of the test groups and the control group**

| Performance | Test group 1 | Test group 2 | Test group 3 | Test group 4 | Control group |
|---|---|---|---|---|---|
| Photoelectric conversion efficiency (%) | 18 | 17 | 13 | 13 | 20 |
| Ink absorbency | **** | ***** | **** | **** | / |
| Clarity | **** | ***** | **** | **** | / |
| Artificial aging resistance time (h) | 2000 | 2000 | 2000 | 2000 | 508 |

As can be seen from Table 1 above, the photovoltaic curtain wall using the light-guiding decorative facing material provided by the present invention has high photoelectric conversion efficiency. Although the photoelectric conversion efficiency is slightly lower than that of the existing photovoltaic curtain wall covered with glass, the photoelectric conversion performance of the photovoltaic cell is not compromised. However, because the light-guiding decorative facing material can be ink-jet printed with a pattern layer in all aspects, the photovoltaic curtain wall in this embodiment can solve the problem that the appearance shape and color of the photovoltaic cell in the existing photovoltaic curtain wall is visible from the outside, and the photovoltaic curtain wall may be designed and presented with a harmonious appearance pattern and color according to the shape, style and pattern of a building to be decorated, thereby effectively solving the problem of visual pollution of the building in application of the photovoltaic curtain, and achieving broad promotion and application of the photovoltaic curtain wall.

### Embodiment 3

Referring to FIG. 4 which shows a schematic structural diagram of a component using the light-guiding decorative facing material in Embodiment 1, the component includes a base body 11 and the light-guiding decorative facing material in Embodiment 1 fixed to the surface of the base body. The base body is provided with a power-on display device 12, and the light-guiding decorative facing material covers the surface of the power-on display device. The base body is provided with a recess 13, and the power-on display device is placed in the recess. The power-on display device is a display screen or a lamp. After the light-guiding decorative facing material covers the surface of the power-on display device, when the component is not powered on, the power-on display device is in an off state, and the surface of the component shows the pattern of the inkjet-printed pattern layer of the light-guiding decorative facing material, while the power-on display device inside the component is hidden inside, and the shape of the power-on display device cannot be seen from the outer surface of the component. When the component is powered-on, the power-on display device is in an on state, and a photoelectric pattern emitted by the power-on display device is refracted by the multi-faceted refractive see-through microcrystal layer and shown on the surface of the inkjet-printed pattern layer. All photoelectric patterns are refracted by the inkjet-printed pattern layer onto the power-on display device to be presented, creating a unique artistic effect.

In the description of the specification, expressions such as "one embodiment", "some embodiments", "example", "specific example" and "some examples" intend to indicate that specific features, structures, materials or characteristics described in conjunction with said embodiment or example are included in at least one embodiment or example of the present invention. In the specification, schematic expressions of these terms do not definitely refer to identical embodiments or examples. Moreover, the specific features, structures, materials or characteristics described may be combined appropriately in any one or more embodiments or examples. In addition, those skilled in the art may integrate and combine different embodiments or examples and features in different embodiments or examples described in the specification without any contradictions.

Although the embodiments of the present invention have been illustrated and described above, it is understandable that the above embodiments are illustrative and should not be construed as limitations of the present invention. Those ordinarily skilled in the art may make transformations, amendments, substitutions and modifications to the above embodiments within the scope of the present invention.

## Claims

1. A light-guiding decorative facing material, **characterized by** comprising a first transparent adhesive layer and a multi-faceted refractive see-through microcrystal layer fixedly connected to the first transparent adhesive layer, wherein the multi-faceted refractive see-through microcrystal layer is made of a transparent/semi-transparent crystalline material, and a surface of the multi-faceted refractive see-through microcrystal layer is provided with an inkjet-printed pattern layer.

2. The light-guiding decorative facing material according to claim 1, wherein the transparent/semi-transparent crystalline material is a rhombohedral crystalline material, and the rhombohedral crystal material is one or a mixture of two or more selected from Zr-doped BaTiO3, Hf-doped BaTiO3, α-Al2O3, α-CrO3, α-Ca2O3, α-FeAlO3, and transition metal-doped α-Al2-xTxO3(T=Sc, Y, La, Ac; x=0.5); and the first transparent adhesive layer is formed by curing a transparent adhesive, and the transparent adhesive is one or a mixture of two or more selected from a transparent epoxy resin adhesive, a transparent EVA, a transparent EAA, a transparent acrylic emulsion and a silicone-acrylic emulsion.

3. The light-guiding decorative facing material according to claim 1, wherein the rhombohedral crystalline material is at least partially inlaid in the first transparent adhesive layer.

4. The light-guiding decorative facing material according to claim 1, wherein the first transparent adhesive layer has a thickness of 0.5-3 mm, the multi-faceted refractive see-through microcrystal layer has a thickness of 0.5-2 mm, the inkjet-printed pattern layer has a thickness of 0.01-0.5 mm, and the transparent/semi-transparent crystalline material has a granularity less than or equal to 10 µm.

5. A preparation method for the light-guiding decorative facing material according to any one of claims 1 to 4, **characterized by** comprising: providing a transparent adhesive emulsion, applying the transparent adhesive emulsion to a forming mold to form the first transparent adhesive layer, then laying a rhombohedral crystalline material on the first transparent adhesive layer to form the multi-faceted refractive see-through microcrystal layer, performing curing, and finally, performing inkjet-printing on the surface of the multi-faceted refractive see-through microcrystal layer to form the inkjet-printed pattern layer; or, mixing the rhombohedral crystalline material and the transparent adhesive emulsion into a slurry, then applying the slurry on the forming model, and performing curing.

6. The preparation method for the light-guiding decorative facing material according to claim 5, wherein a temperature for the curing ranges from a room temperature to 200°C, and a time for the curing is 10-120 min.

7. The preparation method for the light-guiding decorative facing material according to claim 5, wherein when the rhombohedral crystalline material and the transparent adhesive emulsion are mixed into the slurry, a weight ratio of the rhombohedral crystalline material to the transparent adhesive emulsion is 1:(1-5).

8. A photovoltaic curtain wall, **characterized by** comprising the light-guiding decorative facing material according to any one of claims 1 to 4, wherein the photovoltaic curtain wall further comprises a photovoltaic cell, and the light-guiding decorative facing material is fixed to a surface of the photovoltaic cell.

9. The photovoltaic curtain wall according to claim 8, wherein the light-guiding decorative facing material is fixed to the surface of the photovoltaic cell by means of a second transparent adhesive layer.

10. The photovoltaic curtain wall according to claim 9, wherein a protective layer is arranged on the surface of the photovoltaic cell, and the light-guiding decorative facing material is fixed to a surface of the protective layer by means of the second transparent adhesive layer.

11. The photovoltaic curtain wall according to claim 8, further comprising a substrate, wherein the photovoltaic cell is fixed above the substrate by means of a fourth transparent adhesive layer.

12. The photovoltaic curtain wall according to claim 11, wherein the substrate is a glass substrate or a modified inorganic powder composite building decorative panel.

13. A component, **characterized by** comprising a base body and the light-guiding decorative facing material according to any one of claims 1 to 4, wherein the light-guiding decorative facing material is fixed to a surface of the base body, the base body is provided with a power-on display device, and the light-guiding decorative facing material covers a surface of the power-on display device.

14. The component according to claim 13, wherein the base body is provided with a recess, the power-on display device is arranged in the recess, and the power-on display device is a display screen or a lamp.
